(19) Europäisches Patentamt
European Patent Office
Office européen des brevets

(11) EP 3 320 984 B1

(12) **EUROPEAN PATENT SPECIFICATION**

(45) Date of publication and mention of the grant of the patent:
**26.10.2022 Bulletin 2022/43**

(21) Application number: **16821008.6**

(22) Date of filing: **22.06.2016**

(51) International Patent Classification (IPC):
***B05D 5/06*** *(2006.01)* ***B32B 27/20*** *(2006.01)*
***B05D 7/00*** *(2006.01)* ***B05D 7/14*** *(2006.01)*

(52) Cooperative Patent Classification (CPC):
**B05D 7/577; B05D 5/06; B05D 7/14; B05D 7/572; B32B 27/20;** B05D 2202/10

(86) International application number:
**PCT/JP2016/003017**

(87) International publication number:
**WO 2017/006529 (12.01.2017 Gazette 2017/02)**

(54) **MULTILAYER COATING FILM AND COATED ARTICLE**

MEHRSCHICHTIGER BESCHICHTUNGSFILM UND BESCHICHTETER ARTIKEL

FILM DE REVÊTEMENT STRATIFIÉ ET ARTICLE REVÊTU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2015 JP 2015137200**

(43) Date of publication of application:
**16.05.2018 Bulletin 2018/20**

(73) Proprietor: **Mazda Motor Corporation**
**Aki-gun**
**Hiroshima 730-8670 (JP)**

(72) Inventors:
- **YAMANE, Takakazu**
**Hiroshima 730-8670 (JP)**
- **TERAMOTO, Kouji**
**Hiroshima 730-8670 (JP)**
- **HIRANO, Fumi**
**Hiroshima 730-8670 (JP)**
- **OKAMOTO, Keiichi**
**Hiroshima 730-8670 (JP)**

(74) Representative: **Behr, Wolfgang**
**Lorenz Seidler Gossel**
**Rechtsanwälte Patentanwälte**
**Partnerschaft mbB**
**Widenmayerstraße 23**
**80538 München (DE)**

(56) References cited:
**WO-A1-2016/088294**
**JP-A- 2000 000 514**
**JP-A- 2000 017 205**
**JP-A- 2000 084 473**
**JP-A- 2005 144 338**
**JP-A- 2005 205 262**
**JP-A- 2006 181 505**
**JP-A- 2006 182 966**
**JP-A- 2011 020 021**
**JP-A- 2011 025 101**
**JP-A- 2011 162 732**
**JP-A- 2011 251 253**
**JP-A- 2013 169 507**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 320 984 B1

## Description

### TECHNICAL FIELD

The present invention relates to a multilayer coating film and a coated object.

### BACKGROUND ART

Generally, it has been attempted to apply a plurality of coating films on top of each other on a base surface of an automobile body or another automobile component in order to improve protection and appearance of the base. For example, Japanese Unexamined Patent Publication No. H10-192776 discloses: providing a deep color coat containing a deep color pigment (carbon black) on a coating target, which is a metal plate coated with a cationic electrodeposition coat and an intermediate coat; providing a metallic coat containing scale-like aluminum pigments on the surface of the deep color coat; and further providing a clear coat. The deep color coat having the lightness of N0 to N5 of the Munsell color chart, and the scale-like aluminum pigments having a thickness of 0.1 to 1 μm and an average particle size of 20 μm are used to obtain a multilayer coating film with significant flip-flop properties.

Japanese Unexamined Patent Publication No. 2005-200519 discloses a composition of a metallic coat containing three kinds of aluminum flake pigments A to C each having a different average particle size D50 and a different average thickness. The aluminum flake pigment A has the average particle size D50 of 13 to 40 μm, and the average thickness of 0.5 to 2.5 μm. The aluminum flake pigment B has the average particle size D50 of 13 to 40 μm, and the average thickness of 0.01 to 0.5 μm. The aluminum flake pigment C has the average particle size D50 of 4 to 13 μm, and the average thickness of 0.01 to 1.3 μm. The mass ratios of the solid content of the aluminum flake pigments A to C are set to be as follows: A/B is 10/90 to 90/10; and (A+B)/C is 90/10 to 30/70, and the solid content of (A+B+C) to 100 parts by mass of the solid content of resin is set to be 5 to 50 parts by mass. Such constituents are intended to improve the luminance, the flip-flop properties, and the hiding properties.

Japanese Unexamined Patent Publication No. 2010-30075 discloses obtaining a bright coating film which is bright and having electromagnetic wave permeability by providing, on a resin base, a coat which contains flat bright materials made of aluminum. The bright materials are oriented such that their flat surfaces lie along a coating film surface, and are arranged such that the average overlapping number y (which is an average number of the bright materials that intersect with one of orthogonal lines orthogonal to the coating film surface) and the average distance x (which is an average distance between adjacent bright materials in the direction of a same orthogonal line with which the adjacent bright materials intersect) satisfy a given relationship.

JP 2005 144338 A shows a coating method being employed to coat a surface to be coated with a metallic base coating (A) containing a bright pigment and then with a clear coating (B), and the metallic base coating (A) contains vapor-deposited aluminum pieces provided with leafing properties as the bright pigment. Further coatings are known from JP 2013 169507 A, JP 2000 000514 A, JP 2006 181505 A, and JP 2011 020021 A.

### SUMMARY OF THE INVENTION

### TECHNICAL PROBLEM

It is the flip-flop properties (hereinafter referred to as the "FF properties") that give an effect of light and shade or metallic impression to a metallic coat provided, for example, on an automobile body. With the FF properties, the lightness of the coated object varies depending on an angle from which it is viewed. That is, with the FF properties, the lightness (i.e., highlights) and the darkness (i.e., shades) become more distinct. The FF properties are often expressed by a flop index (FI) value of X-Rite, Inc. However, the FI value obtained so far in metallic coatings is about 18, in general, and stunning, enhanced metallic impression has not been achieved yet.

Admittedly, the bright material flakes (e.g., aluminum flakes) oriented along the surface of the bright material-containing layer reduce scattered light from the bright material flakes and increase specular reflected light. As a result, the lightness of the highlights increases and the lightness of the shades decreases, which contributes to obtaining a greater FI value. However, too strong specular reflection on the bright material-containing layer due to control of the orientation of the bright material flakes may result in a phenomenon in which only a portion where the specular reflection occurs is bright (i.e., shining white). That is, it seems brightest when viewed from the same angle as the angle of incidence, but the lightness suddenly decreases with the shift of the angle of view, when viewed even from near the specular reflection angle. In other words, the highlighted portion is seen only in a limited area (i.e., it does not seem that a relatively wide area on the surface is shining), which deteriorates the appearance.

Briefly saying, the FI value expresses the degree of lightness when viewed from near the specular reflection angle with reference to the lightness of the shades, and therefore, the FI value is small if the lightness is low when viewed from near the specular reflection angle. Scattering of light caused by bright material flakes may be enhanced to increase the lightness when viewed from near the specular reflection angle. However, such enhancement increases the lightness of shaded portions, as well. That means that significant FF properties cannot be achieved.

In view of the foregoing background, the present invention is intended to increase the FF properties and enhance the metallic impression in a metallic coating.

SOLUTION TO THE PROBLEM

The present invention controls the specular reflection properties of bright material flakes contained in a bright material-containing layer, and absorbs scattered light, scattered by the bright material flakes, by a colorant in the bright material-containing layer and by a colored base layer.

A multilayer coating film disclosed herein includes a colored base layer containing a colorant and formed directly or indirectly on a surface of a coating target, and a bright material-containing layer containing bright material flakes and a colorant and layered on the colored base layer, wherein

a following equation is employed: $Y(20°) = k \times Y(10°)$, where
k is a coefficient,
Y represents a Y value according to an XYZ color system, which is calibrated by a standard white plate, of the bright material-containing layer in a state without the colorant,
Y(10°) represents a Y value of reflected light measured at a receiving angle (an angle toward a light source from a specular reflection angle) of 10°, and
Y(20°) represents a Y value of reflected light measured at the receiving angle of 20°, and
a colorant concentration C of the bright material-containing layer is expressed in percent by mass, and
the Y(10°), the coefficient k, and the colorant concentration C are three variables, and satisfy, when x-, y-, and z-coordinate axes of a three-dimensional orthogonal coordinate space represent the three variables, that coordinates (Y(10°), k, C) are in a range defined by a octahedron consisting of eight planes expressed by equations A to H, shown below, in which the planes expressed by the equations C and F form an inwardly protruding ridge and the planes expressed by the equations D and G form an outwardly protruding ridge.

$$\text{Equation A: } 3000y - 120z + 3000 = 0$$

$$\text{Equation B: } 3000y - 120z = 0$$

$$\text{Equation C: } 5x - 3750y - 2000 = 0$$

$$\text{Equation D: } 5x - 3750y + 1000 = 0$$

$$\text{Equation E: } 15000y - 9000 = 0$$

$$\text{Equation F: } 5x - 1250y - 3000 = 0$$

$$\text{Equation G: } 5x - 1250y = 0$$

$$\text{Equation H: } 15000y - 3000 = 0$$

The Y value of the XYZ color system is a stimulus value representing the lightness (the luminous reflectance). According to the above conditions, the Y(10°) and the coefficient k are in the ranges of $50 \leq Y(10°) \leq 850$ and $0.2 \leq k \leq 0.6$. This means, in short, that the lightness as viewed from near the specular reflection angle is high. Diffusion reflection of incident light at the edge of the bright material flakes and scatter of the incident light on the surface of the bright material flakes increase the lightness as viewed from near the specular reflection angle.

In this specification, the term "diffuse reflection" is used to describe a phenomenon in which incident light is reflected at various angles, and the term "scatter" is used to describe a phenomenon in which incident light is reflected at a different angle than the angle of the incident light.

In order that a coated object advantageously has a surface shining effect in a relatively wide area of its surface and significant FF properties, the Y(20°), which is a Y value of a portion positioned at a greater angle from the specular reflection angle and closer to the shades, is reduced by an appropriate decreasing rate (the coefficient k) depending on the Y(10°) (see FIG. 10). For example, according to the above conditions, when Y(10°) is 100, the coefficient k is approximately 0.2 to 0.4, and hence the Y(20°) is 20 to 40. When Y(10°) is 400, the coefficient k is 0.2 to 0.6, and hence the Y(20°) is 80 to 240. When Y(10°) is 700, the coefficient k is 0.4 to 0.6, and hence the Y(20°) is 280 to 420.

In other words, in a case where the Y(10°) is relatively small, the coefficient k is set to be a smaller value, although only a slight reduction from Y(10°) to Y(20°) is possible, in order that the Y(20°) can be as small a value as possible to enhance the FF properties. On the other hand, in a case where the Y(10°) is relatively large, a small coefficient k results in an excessive change in the Y value. For example, when Y(10°) is 700, the coefficient k of 0.2 makes the Y(20°) 140 (that is, Y(20°) = 140). This means that the Y value changes greatly. In such a case, the lightness changes suddenly with a shift of the angle of view. To avoid this phenomenon, the coefficient k is set to be a large value in the case where the Y(10°) is relatively large.

Further, according to the above conditions, the colorant concentration C (% by mass) of the bright material-containing layer varies depending on the coefficient k in the equation $Y(20°) = k \times Y(10°)$ (see FIG. 11). For example, when k is 0.2, C is in a range of $5 \leq C \leq 30$. When k is 0.4, C is in a range of $10 \leq C \leq 35$. When k is 0.6, C is in a range of $15 \leq C \leq 40$.

In other words, when the coefficient k is small, the colorant concentration C is small, and the larger the coefficient k becomes, the greater the colorant concentration C becomes. As mentioned earlier, if the coefficient k is small, the Y(10°) is relatively small. In such a case, less light is reflected as diffused light by the bright material flakes (i.e., weak diffuse reflection). Thus, the absorption of the diffused light by the colorant is not so much required. For this reason, the colorant concentration C is set to be low. On the other hand, if the coefficient k is large, the Y(10°) is relatively large. In such a case, the diffuse reflection by the bright material flakes is strong. Therefore the colorant concentration C is set to be high so that the colorant absorbs the diffused light reflected by the bright material flakes, that is, to enhance the FF properties.

The thus formed multilayer coating film, in which the Y(10°) is set to be a larger value and the Y value is reduced from Y(10°) to the Y(20°) as described above, advantageously has a "surface" shining effect in a wide area of its surface, as well as significant FF properties. That is, the light diffused or scattered by the bright material flakes, particularly the scattered light reflected multiple times among a plurality of bright material flakes, is absorbed by the colorant contained in the bright material-containing layer. Further, the light which has reached the colored base layer through a gap between the bright material flakes is absorbed by the colorant contained in the colored base layer. The lightness of the shades can be reduced greatly by the light absorption effect by the colorant in the bright material-containing layer and the colored base layer, as well as by the above control on the degree of reduction of the Y value from Y(10°) to the Y(20°). In other words, the lightness of the shades is easily adjusted by the colorant contained in the bright material-containing layer and by the colored base layer, due to the control on the degree of reduction of the Y value from Y(10°) to the Y(20°) as described above. This is advantageous in enhancing the FF properties.

Further, according to the above multilayer coating film, light is absorbed by the colored base layer. Therefore it is not necessary to add a large amount of colorant to the bright material-containing layer to decrease the lightness of the shades. As a result, the bright material flakes are oriented properly (i.e., the bright material flakes are oriented to be parallel to the surface of the bright material-containing layer), and more light is incident on the bright material flakes. This is advantageous in ensuring the brightness and increasing the lightness of the highlights.

Preferably, aluminum flakes obtained by grinding aluminum foil, and moreover, aluminum flakes with improved surface smoothness, are employed as the bright material flakes to increase the brightness and enhance the metallic impression.

Preferably, such an aluminum flake has a particle size of 8 μm or more and 20 μm or less. If the particle size is smaller than 8 μm, the aluminum flakes are less likely to be oriented properly. If the particle size is larger than 20 μm, some of the aluminum flakes may stick out of the bright material-containing layer, and the corrosion resistance of the coating target may be reduced.

Preferably, the aluminum flake has a thickness of 25 nm or more and 200 nm or less. If the aluminum flake is too thin, more light passes through the flake, which affects adversely in increasing the lightness of the highlights. In addition, if the thickness of the aluminum flake is too thin with respect to its particle size, the aluminum flakes are easily deformed, which adversely affects the orientation of the aluminum flakes. In view of this point, the thickness of the aluminum flake is preferably 0.4% or more of its particle size, that is, 30 nm or more, for example. On the other hand, if the aluminum flake is too thick, the aluminum flakes are less likely to be oriented properly. In addition, such an aluminum flake increases the necessary volume ratio of the aluminum flakes in the bright material-containing layer to ensure the brightness. The physical properties of the coating film are therefore deteriorated. In view of this point, the thickness of the aluminum flake is preferably 200 nm or less. More preferably, the aluminum flake has a thickness of 80 nm or more and 150 nm or less.

In one preferred embodiment, the bright material flakes are aluminum flakes with a thickness of 25 nm or more and 200 nm or less.

Preferably, the aluminum flake has a surface roughness Ra of 100 nm or less to reduce diffuse reflection or scatter of the light.

Preferably, the surface smoothness of the colored base layer is 8 or less in a measurement value Wd measured by WaveScan DOI (trade name) manufactured by BYK-Gardner. As a result, the bright material flakes are oriented properly, which is advantageous in increasing the lightness of the highlights. More preferably, the surface smoothness of the colored base layer is 6 or less in the Wd. The surface roughness Ra of the colored base layer is preferably 5% or less of the particle size of the bright material flakes (the particle size is preferably 8 μm or more and 20 μm or less).

Preferably, the bright material-containing layer has a thickness of 1.5 μm or more and 6 μm or less. As a result, the bright material flakes are oriented properly, which is advantageous in increasing the lightness of the highlights. Preferably, the thickness of the bright material-containing layer is 20% or less of the particle size of the bright material flakes (i.e., 1.5 μm or more and 4 μm or less). The thickness of the bright material-containing layer is set to be in this range to control the angle of orientation of the bright material flakes (i.e., the angle formed between the surface of the bright material-containing layer and the bright material flakes) by the thickness of the bright material-containing layer. The angle of orientation of the bright material flakes is preferably 3 degrees or less, more preferably 2 degrees or less.

In one preferred embodiment, the aluminum flakes are oriented at an angle of 3 degrees or less with respect to a surface of the bright material-containing layer.

In one preferred embodiment, the colorants of the colored base layer and the bright material-containing layer are deep in color with a low visible light reflectance (the Munsell lightness is 5 or less), such as black and red, particularly a blackish color. As described earlier, according to the present invention, the lightness of the shades is reduced by the light absorption effect of the colored base layer. Thus, if a deep color colorant with a low visible light reflectance is employed as the colorant, such a colorant increases the FI value and is advantageous in enhancing the FF properties.

In one preferred embodiment, the colorants of the colored base layer and the bright material-containing layer are black.

In one preferred embodiment, the colorants of the colored base layer (14) and the bright material-containing layer are red.

In one preferred embodiment, the colorants of the colored base layer is black, and the bright material-containing layer is red.

Both a pigment and a dye may be employed as the colorant. Further, two or more kinds of colorants which are mixed together (i.e., a mixed color) may be used.

In one preferred embodiment, the colorants of the colored base layer and the bright material-containing layer are in similar colors. The turbidity of the coating color is therefore reduced, which enhances the impression of density and depth, as well as the metallic impression.

In order that neutral colors are perceived as similar colors, it is desirable that a lightness difference between the neutral colors is 5.0 or less in a Munsell value. In order that chromatic colors are perceived as similar colors, it is desirable that if the hue of one of the chromatic colors is set as a reference (i.e., a zero position) in the Munsell hue circle divided into one hundred sectors, the number of which are increased to +50 in a counterclockwise direction and decreased to -50 in a clockwise direction from the reference position, the hue of the other chromatic color is in a range of ±10 from the reference position.

In one preferred embodiment, the colorants of the colored base layer and the bright material-containing layer are in a blackish color. As a result, a grayish color with a high FI value and enhanced metallic impression can be obtained.

In one preferred embodiment, a transparent clear layer is layered directly on the bright material-containing layer. The resistance to acids and scratches can be achieved by the transparent clear layer.

The coated object including the multilayer coating film provided on a coating target is, for example, an automobile body. The coated object may also be a body of a motorcycle or bodies of other vehicles, or may be other metal products.

## ADVANTAGES OF THE INVENTION

According to the present invention, a bright material-containing layer, containing bright material flakes and a colorant, is layered on a colored base layer containing a colorant. With respect to the bright material-containing layer in a state without the colorant, Y(10°) of the XYZ color system is set to be 50 or more and 850 or less, and Y(20°) is set to be equal to k × Y(10°), wherein k is in a range of $0.2 \leq k \leq 0.6$ and is determined according to the Y(10°). The colorant concentration C of the bright material-containing layer is determined according to the k value. Thus, a coated object can have a "surface" shining effect in a relatively wide area of its surface and significant FF properties.

BRIEF DESCRIPTION OF THE DRAWINGS

FIG. 1 is a diagram schematically illustrating a cross-sectional view of a multilayer coating film.

FIG. 2 is a diagram schematically illustrating a cross-sectional view of a known multilayer coating film to show how light is scattered by bright material flakes and is diffused on a base layer.

FIG. 3 is a diagram schematically illustrating a cross-sectional view of the multilayer coating film according to the present invention in which scattered light is controlled.

FIG. 4 is a diagram illustrating reflected light for explaining how to calculate an FI value.

FIG. 5 is a graph showing an example angle dependence of Y(10°) with respect to a bright material-containing layer in a state without a colorant.

FIG. 6 is a diagram for explaining how to measure a Y value.

FIG. 7 is a graph showing suitable ranges of the Y(10°) and a colorant concentration when a coefficient k is equal to 0.4.

FIG. 8 is a graph showing suitable ranges of the Y(10°) and the colorant concentration when the coefficient k is equal to 0.2.

FIG. 9 is a graph showing suitable ranges of the Y(10°) and the colorant concentration when the coefficient k is equal to 0.6.

FIG. 10 is a graph showing a relationship between the Y(10°) and the coefficient k.

FIG. 11 is a graph showing a relationship between the coefficient k and the colorant concentration C.

FIG. 12 is a graph showing ranges of the Y(10°), the coefficient k, and the colorant concentration C when an FI value is 30 or more.

FIG. 13 is a graph showing ranges of the Y(10°), the coefficient k, and the colorant concentration C when the FI value is 35 or more.

DESCRIPTION OF EMBODIMENTS

Embodiments of the present invention will now be described with reference to the drawings. The following description of preferred embodiments is only an example in nature, and is not intended to limit the scope, applications or use of the present invention.

<Example Configuration of Multilayer Coating Film>

As illustrated in FIG. 1, a multilayer coating film 12 provided on a surface of an automobile body (steel plate) 11 according to the present embodiment contains a colored base layer 14, a bright material-containing layer 15, and a transparent clear layer 16 which are sequentially stacked one upon the other. An electrodeposition coating film (undercoat) 13 is formed on the surface of the automobile body 11 by cationic electrodeposition. The multilayer coating film 12 is provided on top of the electrodeposition coating film 13. In the multilayer coating film 12, the colored base layer 14 corresponds to an intermediate coat, and the bright material-containing layer 15 and the transparent clear layer 16 correspond to a topcoat.

A deep color pigment 21 is dispersed in the colored base layer 14. Bright material flakes 22 and a deep color pigment 23 in a color similar to that of a pigment 21 of the colored base layer 14 are dispersed in the bright material-containing layer 15. Pigments of various hues including, for example, a black pigment (e.g., carbon black, perylene black, and aniline black) or a red pigment (e.g., perylene red) may be employed as the pigments 21 and 23. It is particularly preferable to employ as the pigment 21 carbon black having a particle size distribution with a peak at a particle size of 300 nm or more and 500 nm or less, and employ as pigment 23 carbon black having a particle size distribution with a peak at a particle size of 200 nm or less.

The surface smoothness of the colored base layer 14 is 8 or less in a measurement value Wd (wavelength of 3 to 10 mm) measured by WaveScan DOI (trade name) manufactured by BYK-Gardner, and the thickness of the bright material-containing layer 15 is 1.5 $\mu$m or more and 6 $\mu$m or less.

The bright material flakes 22 of the bright material-containing layer 15 have a thickness of 25 nm or more and 200 nm or less, and are oriented approximately parallel to the surface of the bright material-containing layer 15. Specifically, the bright material flakes 22 are oriented at an angle of 3 degrees or less with respect to the surface of the bright material-containing layer 15. After having applied a coating, which includes the bright material flakes 22 and the pigment 23, on top of the colored base layer 14, a solvent included in the coating film is vaporized by stoving. As a result, the coating film shrinks in volume and becomes thin, and the bright material flakes 22 are arranged at the orientation angle of 3 degrees or less (preferably 2 degree or less).

The colored base layer 14 contains a resin component which may be, e.g., a polyester-based resin. The bright material-containing layer 15 contains a resin component which may be, e.g., an acrylic-based resin. The colored base layer 16 contains a resin component which may be, e.g., an acid/epoxy-based cured acrylic resin.

<Control of Scattered Light, etc.>

As illustrated in FIG. 2, if a large number of bright material flakes 22 are dispersed in the bright material-containing layer 30, light is reflected multiple times by the plurality of bright material flakes 22. The FI value is low if a large portion of the light undergoes multiple reflections and comes out of the bright material-containing layer 30 as scattered light at angles diverging from the specular reflection angle. That is, reducing the scattered light is important to increase the FI value. In addition, the light reaching a base layer 31 after the multiple reflections is diffused by the base layer 31 (i.e., diffuse reflection). The FI value is low if the diffuse reflection is strong. Thus, reducing the diffuse reflection by the base layer 31 is important to increase the FI value.

As illustrated in FIG. 3, the pigments 23 contained in the bright material-containing layer 15 contribute to increasing the FI value by absorbing the scattered light. The multiple reflections increase the optical path length. Due to the increased optical path length, light is more likely to be absorbed by the pigments 23. A greater FI value is obtained as a result. The broken-line arrows show that the pigments 23 reduce the intensity of the scattered light. Further, the scattered light which has reached the colored base layer 14 is absorbed by the colored base layer 14. That means the diffuse reflection is reduced. A greater FI value is obtained as a result.

A small area occupancy of the bright material flakes 22 reduces specular reflection of light by the bright material flakes 22, which affects adversely in increasing the FI value. On the other hand, a large area occupancy of the bight material flakes 22 increases the number of multiple reflections by the bight material flakes 22, which results in an increase in the scattered light and affects adversely in increasing the FI value.

As illustrated in FIG. 4, the FI value is obtained from the equation shown below, wherein L*45° is a lightness index of reflected light (45° reflected light) that is angled 45 degrees from a specular reflection angle toward an angle of incident light, which is incident on a surface of the multilayer coating film 12 at a 45-degree angle from a normal to the surface, L*15° is a lightness index of reflected light (15° reflected light) that is angled 15 degrees from the specular reflection angle toward the angle of incident light, and L*110° is a lightness index of reflected light (110° reflected light) that is angled 110 degrees from the specular reflection angle toward the angle of incident light.

$$FI = 2.69 \times (L^{*}15° - L^{*}110°)^{1.11} / L^{*}45°^{0.86}$$

<Bright Material-Containing Layer>

FIG. 5 illustrates example angle dependence of a Y value according to the XYZ color system, which is calibrated by a standard white plate, of the bright material-containing layer in a state without a colorant. FIG. 6 illustrates how to measure Y values. Light from a light source 41 is incident on the bright material-containing layer 15 at an angle of 45°. The receiving angle of a sensor 42 is defined such that the specular reflection angle is 0°. A three-dimensional goniospectrophotometric color measurement system GCMS-4 from Murakami Color Research Laboratory was used to measure the values. In the example illustrated in FIG. 5, Y(10°) is equal to 510 and Y(20°) is equal to 200, wherein Y(10°) represents a Y value of reflected light measured at a receiving angle (i.e., an angle toward the light source from the specular reflection angle) of 10°, and Y(20°) represents a Y value of the reflected light measured at a receiving angle of 20°.

According to the present invention, the following expressions are used in order that the coated object has a "surface" shining effect in a relatively wide area of its surface and significant FF properties: $50 \leq Y(10°) \leq 850$ and $Y(20°) = k \times Y(10°)$, wherein Y(10°), k, and a colorant concentration C (% by mass) of the bright material-containing layer satisfy a predetermined condition. Herein, k is a coefficient and satisfies $0.2 \leq k \leq 0.6$. Details will be described below.

As illustrated in FIG. 7, an experiment on a test product shows that if k is 0.4, the FI value is 30 or more when Y(10°) and C satisfy $100 \leq Y(10°) \leq 700$ and $10 \leq C \leq 35$. The FI value is 35 or more when Y(10°) and C satisfy $200 \leq Y(10°) \leq 600$ and $15 \leq C \leq 30$. In FIG. 7, the coordinates (x, y, z) given to the vertexes a to h of figures showing suitable ranges indicate the coordinates of a three-dimensional orthogonal coordinate space whose x-, y- and z-coordinate axes represent three variables Y(10°), k and C, respectively. The same explanation regarding the coordinates applies to FIGS. 8 and 9.

Similarly, as illustrated in FIG. 8, if k is 0.2, the FI value is 30 or more when Y(10°) and C satisfy $50 \leq Y(10°) \leq 650$ and $5 \leq C \leq 30$. The FI value is 35 or more when Y(10°) and C satisfy $150 \leq Y(10°) \leq 550$ and $10 \leq C \leq 25$.

Similarly, as illustrated in FIG. 9, if k is 0.6, the FI value is 30 or more when Y(10°) and C satisfy $250 \leq Y(10°) \leq 850$ and $15 \leq C \leq 40$. The FI value is 35 or more when Y(10°) and C satisfy $350 \leq Y(10°) \leq 750$ and $20 \leq C \leq 35$.

FIG. 10 illustrates a two-dimensional orthogonal coordinate system whose coordinate axes represent two variables, i.e., Y(10°) and the coefficient k. The vertexes a to h, a' to h', and a" to h" shown in FIGS. 7 to 9 are plotted in FIG. 10 to see the relationship between Y(10°) and the coefficient k. A suitable range of the coefficient k differs depending on Y(10°) as shown in the figure.

FIG. 11 illustrates a two-dimensional orthogonal coordinate system whose coordinate axes represent two variables, i.e., the coefficient k and the colorant concentration C. The vertexes a to h, a' to h', and a" to h" are plotted in FIG. 11 to see the relationship between the coefficient k and the colorant concentration C. A suitable range of the colorant concentration C differs depending on the coefficient k as shown in the figure.

Thus, as illustrated in FIG. 12, ranges of Y(10°), the coefficient k, and the colorant concentration C at which the FI value is 30 or more can be expressed by the three-dimensional orthogonal coordinate space whose x-, y-, and z-coordinate axes represent the three variables Y(10°), k and C.

Specifically, the polyhedron shown in FIG. 12 is formed by the vertexes a to d, a' to d', and a" to d" plotted in the three-dimensional orthogonal coordinate space. The polyhedron consists of ten planes A to J in total, each including four vertexes shown in Table 1.

A plane expressed by the coordinates (x, y, z) of the three-dimensional orthogonal coordinate space can be expressed by the equation "$\alpha x + \beta y + \gamma z + \delta = 0$." The ten planes are expressed by the equations shown in Table 1.

[Table 1]

| Plane | Vertexes | Equation for Plane |
|---|---|---|
| A | (a, c, a", c") | A: 3000y-120z+3000=0 |
| B | (b, d, b", d") | B: 3000y-120z=0 |
| C | (c, d, c", d") | C: 5x-3750y-2000=0 |
| D | (a, b, a", b") | D: 5x-3750y+1000=0 |
| E | (a", c", b", d") | E: 15000y-9000=0 |
| F | (c, d, c', d') | F: 5x-1250y-3000=0 |
| G | (a, b, a', b') | G: 5x-1250y=0 |
| H | (a', c', b', d') | H: 15000y-3000=0 |
| I | (a, c, a', c') | A: 3000y-120z+3000=0 |
| J | (b, d, b', d') | B: 3000y-120z=0 |

The planes A and I are expressed by the same equation, which means that these planes are the same plane. The planes B and J are expressed by the same equation, which means that these planes are the same plane. Thus, the polyhedron shown in FIG. 12 can be said to be an octahedron consisting of the eight planes A to H. The C and F planes of this octahedron form an inwardly protruding ridge, and the D and G planes form an outwardly protruding ridge.

Specifically, the polyhedron shown in FIG. 12 is an octahedron which consists of the eight planes expressed by the equations A to H listed in Table 1, wherein the planes expressed by the equations C and F form an inwardly protruding ridge, and the planes expressed by the equations D and G form an outwardly protruding ridge. The FI value is 30 or more if Y(10°), the coefficient k, and the colorant concentration C satisfy that the coordinates (Y(10°), k, C) are in the range defined by the octahedron.

Similarly, as illustrated in FIG. 13, ranges of Y(10°), the coefficient k, and the colorant concentration C at which the FI value is 35 or more can be expressed by the three-dimensional orthogonal coordinate space whose x-, y-, and z-coordinate axes represent the three variables Y(10°), k and C. Specifically, this polyhedron is formed by the vertexes e to h, e' to h', and e" to h" plotted in the three-dimensional orthogonal coordinate space, and consists of ten planes A' to J' in total, each including four vertexes shown in Table 2. The ten planes are expressed by the equations shown in Table 2.

[Table 2]

| Plane | Vertexes | Equation for Plane |
|---|---|---|
| A' | (e, g, e", g") | A': 2000y-80z+1600=0 |
| B' | (f, h, f', h") | B': 2000y-80z+400=0 |

(continued)

| Plane | Vertexes | Equation for Plane |
|---|---|---|
| C’ | (g, h, g", h") | C’: 3x-2250y-900=0 |
| D’ | (e, f, e", f") | D’: 3x-2250y+300=0 |
| E’ | (e", g", h") f", | E’: 6000y-3600=0 |
| F’ | (g, h, g’, h’) | F’: 3x-750y-1500=0 |
| G’ | (e, f, e’, f’) | G’: 3x-750y-300=0 |
| H’ | (e’, g’, f’, h’) | H’: 6000y-1200=0 |
| I’ | (e, g, e’, g’) | A’: 2000y-80z+1600=0 |
| J’ | (f, h, f’, h’) | B’: 2000y-80z+400=0 |

The planes A’ and I’ are expressed by the same equation, which means that these planes are the same plane. The planes B’ and J’ are expressed by the same equation, which means that these planes are the same plane. Thus, the polyhedron shown in FIG. 13 can be said to be an octahedron consisting of the eight planes A’ to H’. The C’ and F’ planes of this octahedron form an inwardly protruding ridge, and the D’ and G’ planes form an outwardly protruding ridge.

Specifically, the polyhedron shown in FIG. 13 is an octahedron which consists of the eight planes expressed by the equations A’ to H’ listed in Table 2, wherein the planes expressed by the equations C’ and F’ form an inwardly protruding ridge, and the planes expressed by the equations D’ and G’ form an outwardly protruding ridge. The FI value is 35 or more if Y(10°), the coefficient k, and the colorant concentration C satisfy that the coordinates (Y(10°), k, C) are in the range defined by the octahedron.

If the Y(10°), the coefficient k, and the colorant concentration C are determined such that the FI value is 30 or more, the bright material-containing layer containing a colorant has the Y(10°) of about 50 to 200, both inclusive, and the coefficient k (=Y(20°)/Y(10°)) of about 0.1 to 0.4, both inclusive.

<Preferred Examples>

-First Example of Multilayer Coating Film (Gray Color Development)-

Table 3 shows the constituents of a coating film according to the present example.

[Table 3]

| First Example of Multilayer Coating Film (Gray Color Development) | | | |
|---|---|---|---|
| Coating Film Layer | Kinds of Resin, etc. | Mass % of Solid Content | Thickness (μm) |
| Transparent Clear Layer | Resin: Acid/Epoxy-Based Cured Acrylic Resin | 100 | 30 |
| Bright Material-Containing Layer Y(10°)=519 Y(20°)=198 | Resin: Acrylic-Based Resin | 58.9 | 3 |
| | Pigment: Fine Powder Carbon Black | 21.5 | |
| | Bright Material: Aluminum Flakes | 19.6 | |
| Colored Base Layer | Resin: Polyester-Based Resin | 65.7 | 10 |
| | Pigment: Commercially Available Carbon Black | 7.1 | |
| | Extender Pigment: Barium Sulfate | 27.2 | |

After having employed the wet-on-wet method to apply coatings for the colored base layer, the bright material-containing layer, and the transparent clear layer, onto a steel product, the layers are stoved (heated at 140°C for 20 minutes). Commercially available carbon black was employed as a pigment for the colored base layer. Fine powder carbon black is employed as a pigment for the bright material-containing layer. Aluminum flakes (having the average particle size of 12 μm, a thickness of 110 nm, and the surface roughness of Ra ≤ 100 nm) are employed as bright material flakes, and arranged at the orientation angle of 2 degrees or less. The bright material-containing layer in a state without the pigment has the Y(10°) of 519 and the Y(20°) of 198.

-Second Example of Multilayer Coating Film (Red Color Development)-

Table 4 shows the constituents of a coating film according to the present example. The present example differs from the first example of the multilayer coating film in that perylene red is employed as a pigment for the bright material-containing layer, instead of the carbon black. The other constituents or preparation method are the same as those of the first example. The bright material-containing layer in a state without the pigment has the Y(10°) of 519 and the Y(20°) of 198.

[Table 4]

| Second Example of Multilayer Coating Film (Red Color Development) | | | |
|---|---|---|---|
| Coating Film Layer | Kinds of Resin, etc. | Mass % of Solid Content | Thickness (μm) |
| Transparent Clear Layer | Resin: Acid/Epoxy-Based Cured Acrylic Resin | 100 | 30 |
| Bright Material-Containing Layer Y(10°)=519 Y(20°)=198 | Resin: Acrylic-Based Resin | 61.5 | 3 |
| | Pigment: Perylene Red | 20.0 | |
| | Bright Material: Aluminum Flakes | 18.5 | |
| Colored Base Layer | Resin: Polyester-Based Resin | 65.7 | 10 |
| | Pigment: Commercially Available Carbon Black | 7.1 | |
| | Extender Pigment: Barium Sulfate | 27.2 | |

-Third Example of Multilayer Coating Film (Red Color Development)-

Table 5 shows the constituents of a coating film according to the present example. The present example differs from the first example of the multilayer coating film in that perylene red is employed as pigments for the bright material-containing layer and the colored base layer, instead of the carbon black. The other constituents or preparation method are the same as those of the first example. The bright material-containing layer in a state without the pigment has the Y(10°) of 519 and the Y(20°) of 198.

[Table 5]

| Third Example of Multilayer Coating Film (Red Color Development) | | | |
|---|---|---|---|
| Coating Film Layer | Kinds of Resin, etc. | Mass % of Solid Content | Thickness (μm) |
| Transparent Clear Layer | Resin: Acid/Epoxy-Based Cured Acrylic Resin | 100 | 30 |
| Bright Material-Containing Layer Y(10°) =519 Y(20°)= 198 | Resin: Acrylic-Based Resin | 61.5 | 3 |
| | Pigment: Perylene Red | 20.0 | |
| | Bright Material: Aluminum Flakes | 18.5 | |
| Colored Base Layer | Resin: Polyester-Based Resin | 60.9 | 12 |
| | Pigment: Perylene Red | 13.9 | |
| | Extender Pigment: Barium Sulfate | 25.2 | |

-Evaluation of Multilayer Coating Films-

The FI vales of the first to third examples of the multilayer coating film were measured. Table 6 shows the results.

[Table 6]

| | |
|---|---|
| First Example of Multilayer Coating Film (Gray Color Development) | FI=35 |
| Second Example of Multilayer Coating Film (Red Color Development) | FI=30 |
| Third Example of Multilayer Coating Film (Red Color Development) | FI=25 |

The FI value of the second example of the multilayer coating film (red color development) is smaller than that of the first example of the multilayer coating film (gray color development). This may be because unlike a black pigment, the red pigment (i.e., perylene red) contained in the bright material-containing layer of the second example of the multilayer coating film strongly reflects visible light in a long wavelength range. That is, the FI value is small maybe because the light is diffused by the red pigment and because the red pigment absorbs less scattered light, scattered by the bright material flakes, than the black pigment.

The FI value of the third example of the multilayer coating film is even smaller than that of the second example of the multilayer coating film. This may be because the red pigment is used in the colored base layer, that is, the colored base layer absorbs less light than the colored base layer containing a black pigment, in the third example of the multilayer coating film.

DESCRIPTION OF REFERENCE CHARACTERS

11 Automobile Body (Steel Plate)
12 Multilayer Coating Film
13 Electrodeposition Coating Film
14 Colored Base Layer
15 Bright Material-Containing Layer
16 Transparent Clear Layer
21 Pigment (Colorant)
22 Bright Material Flake
23 Pigment (Colorant)

## Claims

**1.** A multilayer coating film (12) comprising:

a colored base layer (14) containing a colorant (21) and formed directly or indirectly on a surface of a coating target (11), and a bright material-containing layer (15) containing bright material flakes (22) and a colorant (23) and layered on the colored base layer (14), **characterized in that**
a following equation is employed: $Y(20°) = k \times Y(10°)$, where
k is a coefficient,
Y represents a Y value according to an XYZ color system, which is calibrated by a standard white plate, of the bright material-containing layer (15) in a state without the colorant (23),
Y(10°) represents a Y value of reflected light measured at a receiving angle (an angle toward a light source from a specular reflection angle) of 10°, and
Y(20°) represents a Y value of reflected light measured at the receiving angle of 20°, and
a colorant concentration C of the bright material-containing layer (15) is expressed in percent by mass, and the Y(10°), the coefficient k, and the colorant concentration C are three variables, and satisfy, when x-, y-, and z-coordinate axes of a three-dimensional orthogonal coordinate space represent the three variables, that coordinates (Y(10°), k, C) are in a range defined by a octahedron consisting of eight planes expressed by equations A to H, shown below, in which the planes expressed by the equations C and F form an inwardly protruding ridge and the planes expressed by the equations D and G form an outwardly protruding ridge.

$$\text{Equation A: } 3000y - 120z + 3000 = 0$$

$$\text{Equation B: } 3000y - 120z = 0$$

$$\text{Equation C: } 5x - 3750y - 2000 = 0$$

$$\text{Equation D: } 5x - 3750y + 1000 = 0$$

$$\text{Equation E: } 15000y - 9000 = 0$$

$$\text{Equation F: } 5x - 1250y - 3000 = 0$$

$$\text{Equation G: } 5x - 1250y = 0$$

$$\text{Equation H: } 15000y - 3000 = 0$$

**2.** The multilayer coating film (12) of claim 1, wherein
the bright material flakes (22) are aluminum flakes (22) with a thickness of 25 nm or more and 200 nm or less.

**3.** The multilayer coating film (12) of claim 2, wherein
the aluminum flakes (22) are oriented at an angle of 3 degrees or less with respect to a surface of the bright material-containing layer (15).

**4.** The multilayer coating film (12) of any one of claims 1 to 3, wherein
the colorants (21, 23) of the colored base layer (14) and the bright material-containing layer (15) are black.

**5.** The multilayer coating film (12) of any one of claims 1 to 3, wherein
the colorants (21, 23) of the colored base layer (14) and the bright material-containing layer (15) are red.

**6.** The multilayer coating film (12) of any one of claims 1 to 3, wherein
the colorants (21, 23) of the colored base layer is black, and the bright material-containing layer is red.

**7.** The multilayer coating film (12) of any one of claims 1 to 6, wherein
a transparent clear layer (16) is layered directly on the bright material-containing layer (15).

**8.** A coated object including the multilayer coating film (12) of any one of claims 1 to 7.

**Patentansprüche**

**1.** Mehrlagiger Beschichtungsfilm (12), aufweisend:

eine farbige Grundschicht (14), die einen Farbstoff (21) enthält und mittelbar oder unmittelbar auf einer Oberfläche eines Beschichtungsziel (11) ausgebildet ist, sowie eine Glanzstoff-haltige Schicht, die Glanzstoffflocken (22) und einen Farbstoff (23) enthält und die auf der farbigen Grundschicht (14) aufgeschichtet ist,
**dadurch gekennzeichnet, dass**
eine folgende Gleichung zur Anwendung kommt: $Y(20°) = k \times Y(10°)$, wobei
k ein Koeffizient ist,
Y einen Y-Wert gemäß einem XYZ-Farbsystem, das durch eine weiße Standardplatte kalibriert wird, der Glanzstoff-haltigen Schicht (15) in einem Zustand ohne den Farbstoff (23) repräsentiert,

Y(10°) einen Y-Wert von Reflexionslicht repräsentiert, das bei einem Empfangswinkel (einem Winkel hin zu einer Lichtquelle von einem Winkel spekularer Reflexion) von 10° gemessen wird, und
Y(20°) einen Y-Wert von Reflexionslicht repräsentiert, das bei dem Empfangswinkel von 20° gemessen wird, und eine Farbstoffkonzentration C der Glanzstoff-haltigen Schicht (15) in Massenprozent ausgedrückt wird, und das Y(10°), der Koeffizient k und die Farbstoffkonzentration C drei Variablen sind, und, wenn X-, Y- und Z-Koordinatenachsen eines dreidimensionalen orthogonalen Koordinatenraums die drei Variablen repräsentieren, erfüllen, dass Koordinaten (Y(10°), k, C) in einem Bereich liegen, der von einem Oktaeder definiert wird, das aus acht Ebenen besteht, die durch die unten gezeigten Gleichungen A bis H ausgedrückt werden, wobei die durch die Gleichungen C und F ausgedrückten Ebenen einen nach innen vorstehenden Grat bilden und die durch die Gleichungen D und G ausgedrückten Ebenen einen nach außen vorstehenden Grat bilden:

$$\text{Gleichung A: } 3000y - 120z + 3000 = 0$$

$$\text{Gleichung B: } 3000y - 120z = 0$$

$$\text{Gleichung C: } 5x - 3750y - 2000 = 0$$

$$\text{Gleichung D: } 5x - 3750y + 1000 = 0$$

$$\text{Gleichung E: } 15000y - 9000 = 0$$

$$\text{Gleichung F: } 5x - 1250y = 0$$

$$\text{Gleichung G: } 5x - 1250y = 0$$

$$\text{Gleichung H: } 15000y - 3000 = 0.$$

**2.** Mehrlagiger Beschichtungsfilm (12) gemäß Anspruch 1, wobei die Glanzstoffflocken (22) Aluminiumflocken (22) mit einer Dicke von 25 nm oder mehr und 200 nm oder weniger sind.

**3.** Mehrlagiger Beschichtungsfilm (12) gemäß Anspruch 2, wobei die Aluminiumflocken (22) unter einem Winkel von 3 Grad oder weniger in Bezug auf eine Oberfläche der Glanzstoff-haltigen Schicht (15) ausgerichtet sind.

**4.** Mehrlagiger Beschichtungsfilm (12) gemäß einem der Ansprüche 1 bis 3, wobei die Farbstoffe (21, 23) der farbigen Grundschicht (14) und der Glanzstoff-haltigen Schicht (15) schwarz sind.

**5.** Mehrlagiger Beschichtungsfilm (12) gemäß einem der Ansprüche 1 bis 3, wobei die Farbstoffe (21, 23) der farbigen Grundschicht (14) und der Glanzstoff-haltigen Schicht (15) rot sind.

**6.** Mehrlagiger Beschichtungsfilm (12) gemäß einem der Ansprüche 1 bis 3, wobei die Farbstoffe (21, 23) der farbigen Grundschicht schwarz sind und die Glanzstoff-haltige Schicht rot ist.

**7.** Mehrlagiger Beschichtungsfilm (12) gemäß einem der Ansprüche 1 bis 6, wobei eine transparente Klarschicht (16) direkt auf die Glanzstoff-haltige Schicht geschichtet ist.

**8.** Beschichtetes Objekt, aufweisend den mehrlagigen Beschichtungsfilm (12) gemäß einem der Ansprüche 1 bis 7.

## Revendications

1. Film de revêtement multicouche (12) comprenant :
une couche de base colorée (14) contenant un colorant (21) et formée directement ou indirectement sur une surface d'une cible de revêtement (11), et une couche contenant un matériau brillant (15) contenant des flocons de matériau brillant (22) et un colorant (23) et stratifiée sur la couche de base colorée (14), **caractérisé en ce que**

   une équation suivante est employée : $Y(20°) = k \times Y(10°)$, où
   k est un coefficient,
   Y représente une valeur Y selon un système de couleurs XYZ, qui est étalonné par une plaque blanche standard, de la couche contenant un matériau brillant (15) dans un état sans le colorant (23),
   Y(10°) représente une valeur Y de lumière réfléchie mesurée à un angle de réception (un angle vers une source de lumière à partir d'un angle de réflexion spéculaire) de 10°, et
   Y(20°) représente une valeur Y de lumière réfléchie mesurée à l'angle de réception de 20°, et
   une concentration de colorant C de la couche contenant un matériau brillant (15) est exprimée en pourcentage en masse, et
   le Y(10°), le coefficient k, et la concentration de colorant C sont trois variables, et satisfont, lorsque les axes de coordonnées x, y et z d'un espace de coordonnées orthogonales tridimensionnel représentent les trois variables, que les coordonnées (Y(10°), k, C) sont dans un intervalle défini par un octaèdre constitué de huit plans exprimés par les équations A à H, représentées ci-dessous, dans lequel les plans exprimés par les équations C et F forment une arête faisant saillie vers l'intérieur et les plans exprimés par les équations D et G forment une arête faisant saillie vers l'extérieur.

$$\text{Équation A : } 3000y - 120z + 3000 = 0$$

$$\text{Équation B : } 3000y - 120z = 0$$

$$\text{Équation C : } 5x - 3750y - 2000 = 0$$

$$\text{Équation D : } 5x - 3750y + 1000 = 0$$

$$\text{Équation E : } 15000y - 9000 = 0$$

$$\text{Équation F : } 5x - 1250y - 3000 = 0$$

$$\text{Équation G : } 5x - 1250y = 0$$

$$\text{Équation H : } 15000y - 3000 = 0$$

2. Film de revêtement multicouche (12) selon la revendication 1, dans lequel les flocons de matériau brillant (22) sont des flocons d'aluminium (22) d'une épaisseur de 25 nm ou plus et 200 nm ou moins.

3. Film de revêtement multicouche (12) selon la revendication 2, dans lequel les flocons d'aluminium (22) sont orientés selon un angle de 3 degrés ou moins par rapport à une surface de la couche contenant un matériau brillant (15).

4. Film de revêtement multicouche (12) selon l'une quelconque des revendications 1 à 3, dans lequel les colorants (21, 23) de la couche de base colorée (14) et de la couche contenant un matériau brillant (15) sont noirs.

5. Film de revêtement multicouche (12) selon l'une quelconque des revendications 1 à 3, dans lequel les colorants (21, 23) de la couche de base colorée (14) et de la couche contenant un matériau brillant (15) sont rouges.

6. Film de revêtement multicouche (12) selon l'une quelconque des revendications 1 à 3, dans lequel les colorants (21, 23) de la couche de base colorée sont noirs, et ceux de la couche contenant un matériau brillant sont rouges.

7. Film de revêtement multicouche (12) selon l'une quelconque des revendications 1 à 6, dans lequel une couche transparente claire (16) est stratifiée directement sur la couche contenant un matériau brillant (15).

8. Objet revêtu incluant le film de revêtement multicouche (12) selon l'une quelconque des revendications 1 à 7.

FIG.1

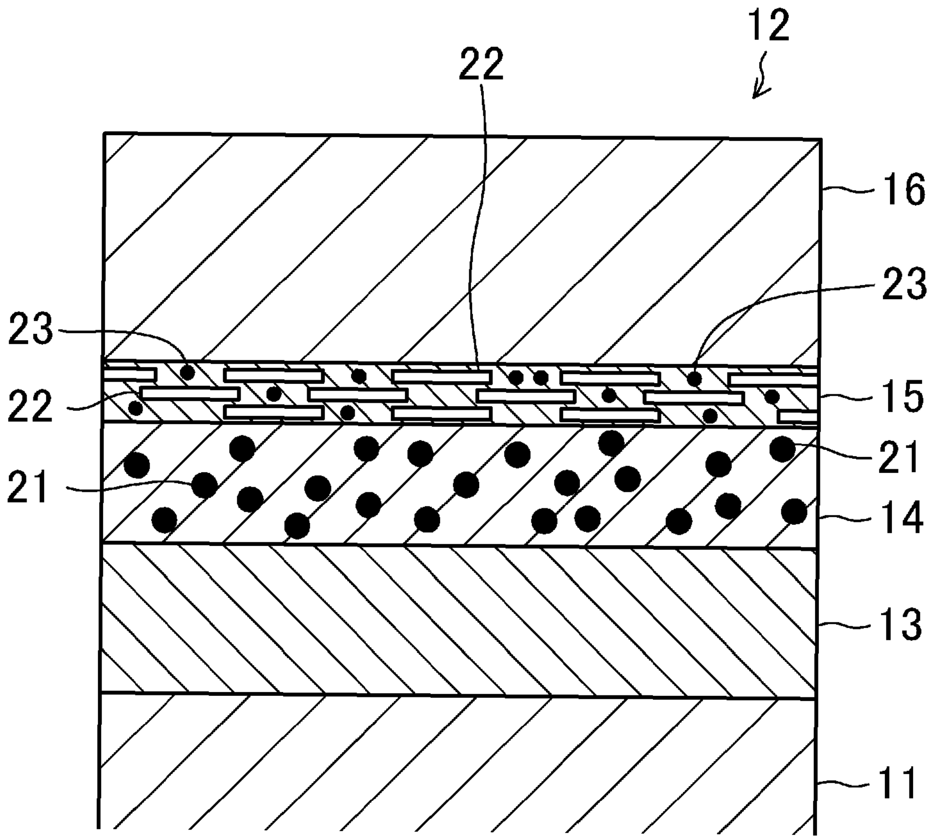

FIG.2

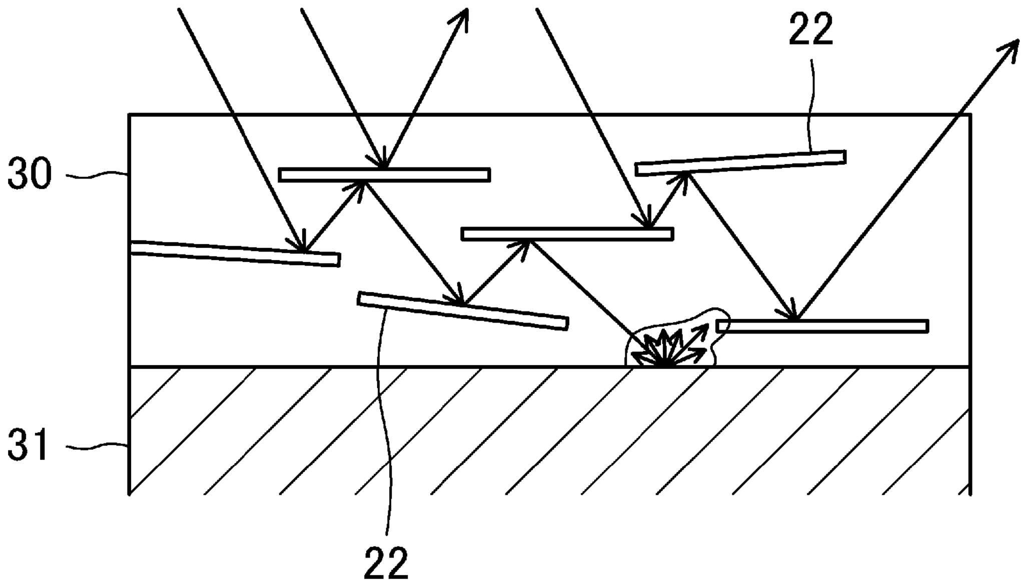


FIG.3

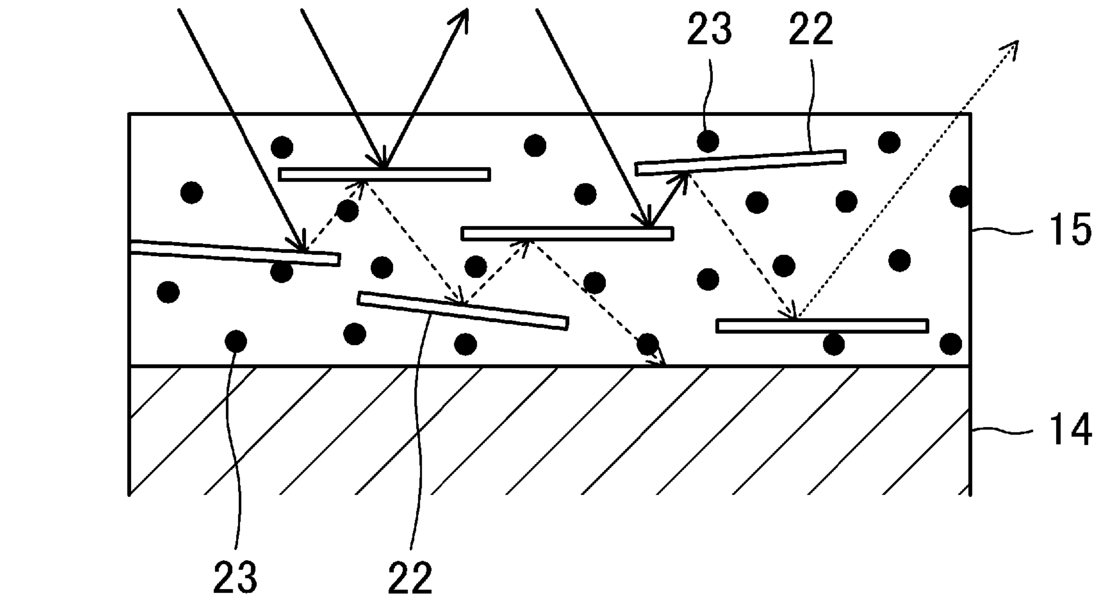

FIG.4

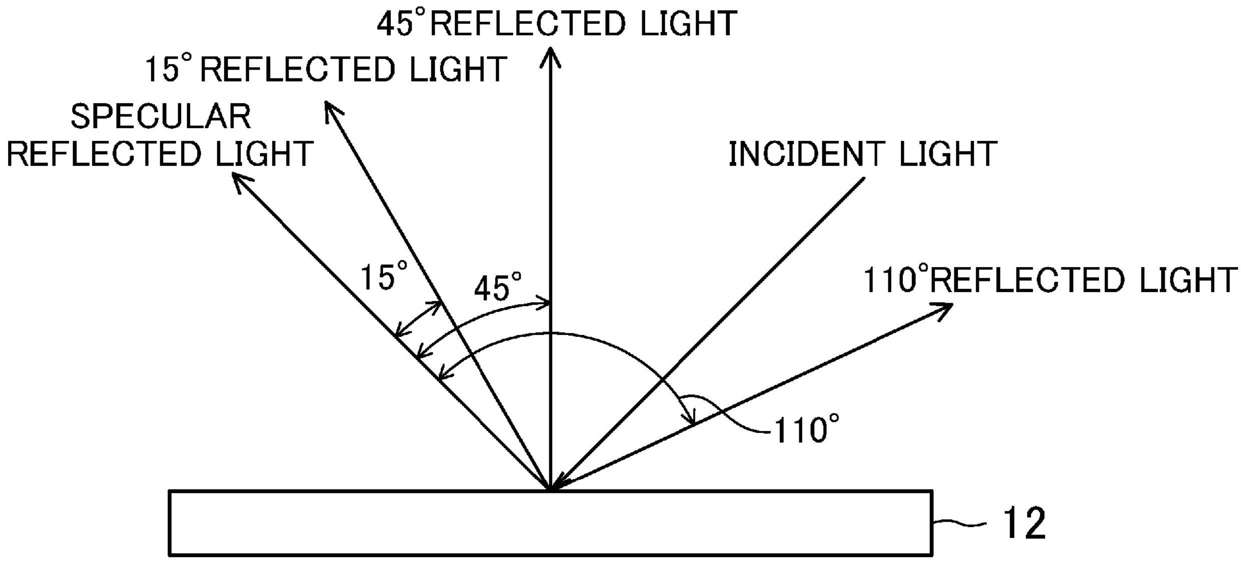
45° REFLECTED LIGHT
15° REFLECTED LIGHT
SPECULAR REFLECTED LIGHT
INCIDENT LIGHT
15°
45°
110°REFLECTED LIGHT
110°
12

FIG.5

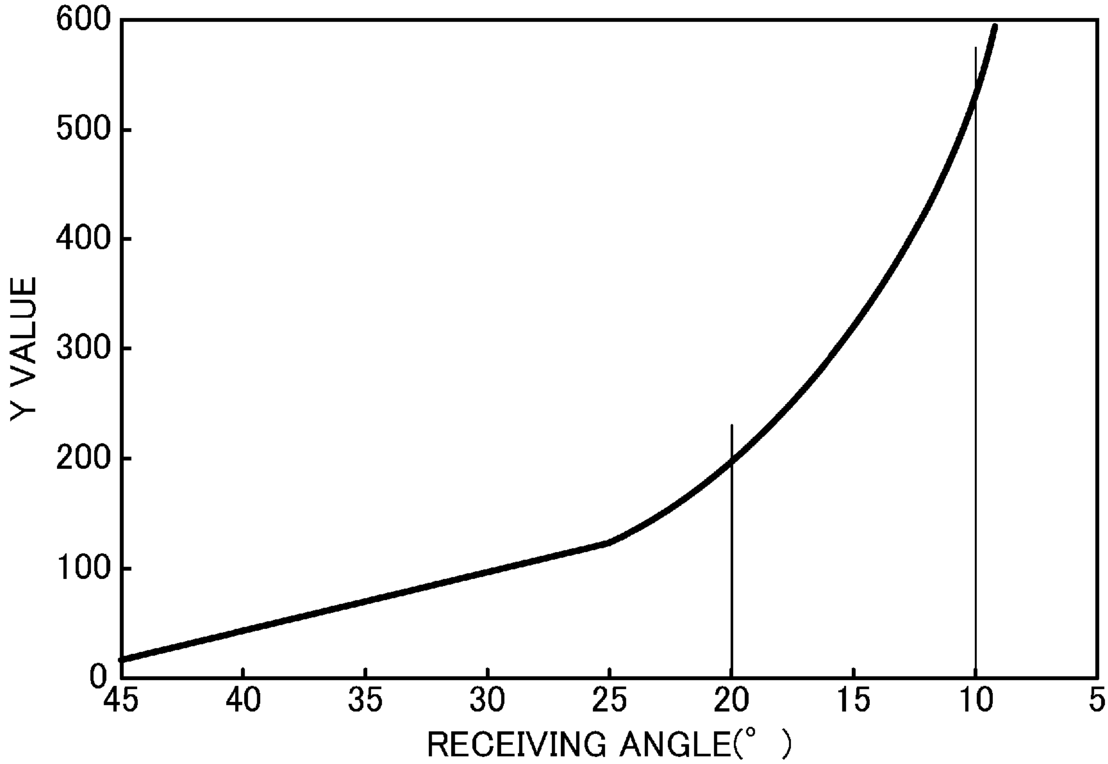
600
500
400
300
200
100
0
Y VALUE
45
40
35
30
25
20
15
10
5
RECEIVING ANGLE(° )

FIG.6

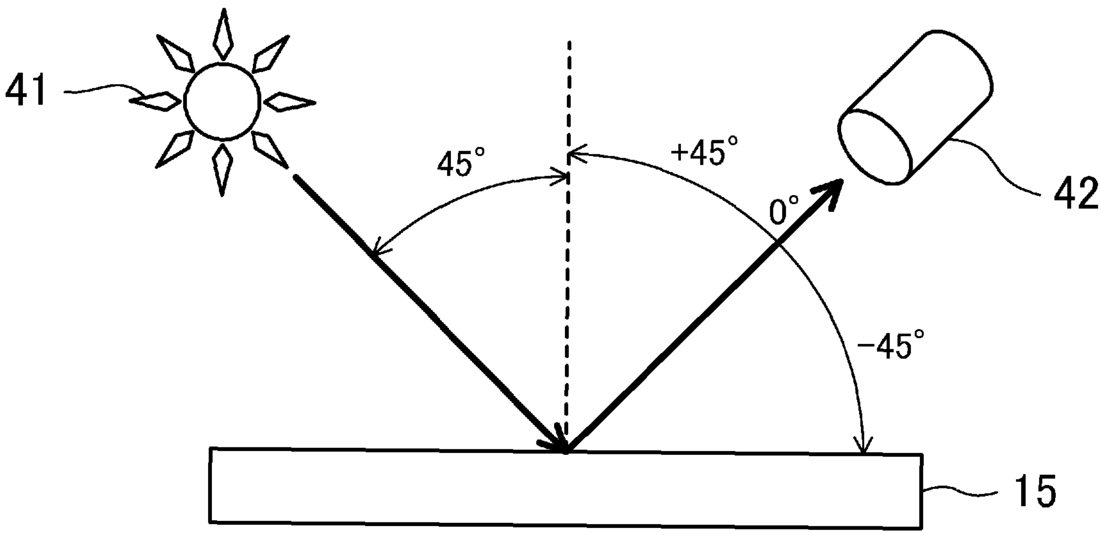

FIG.7

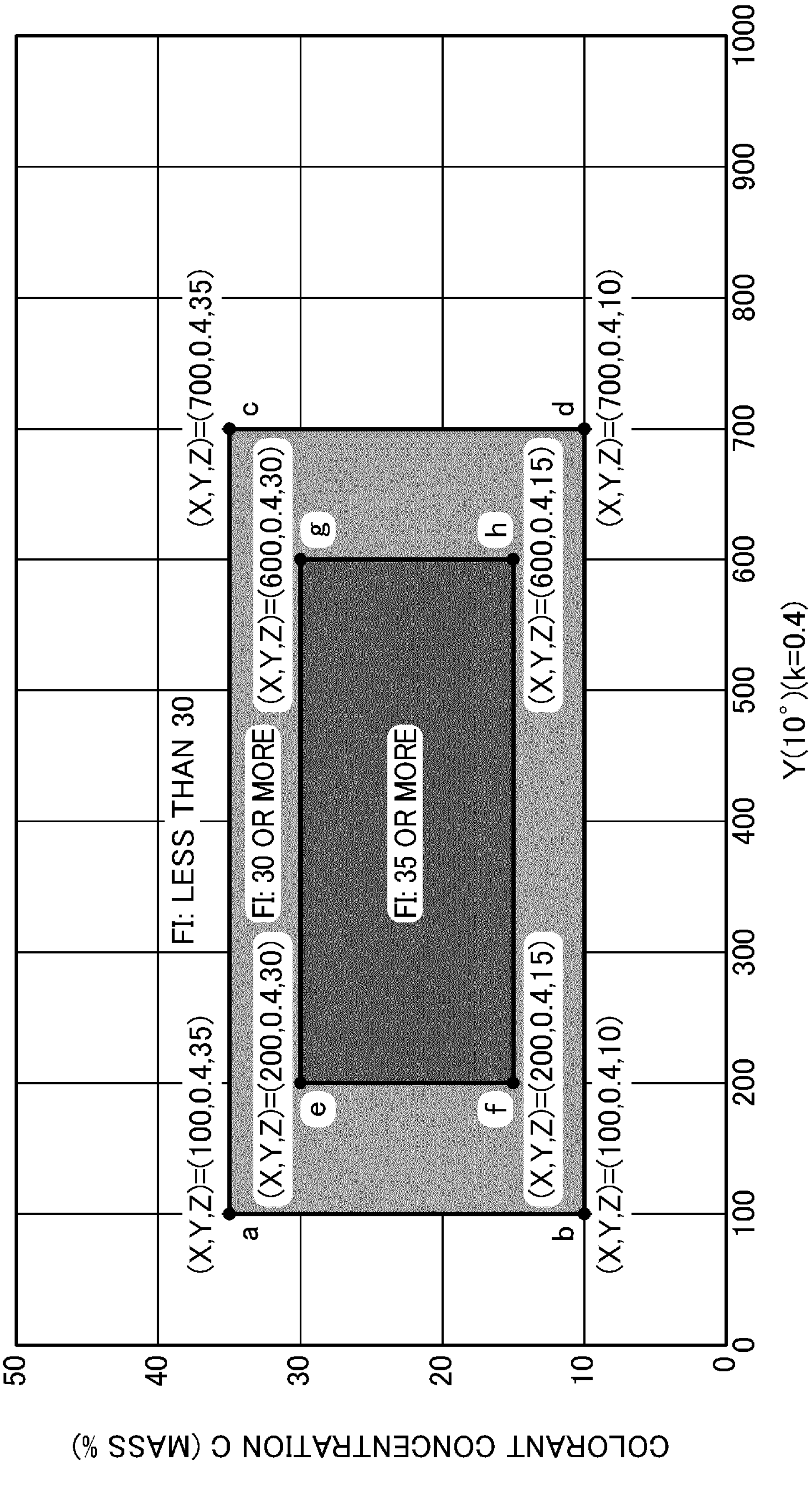
FI: LESS THAN 30
FI: 30 OR MORE
FI: 35 OR MORE
a (X,Y,Z)=(100,0.4,35)
b (X,Y,Z)=(100,0.4,10)
c (X,Y,Z)=(700,0.4,35)
d (X,Y,Z)=(700,0.4,10)
e (X,Y,Z)=(200,0.4,30)
f (X,Y,Z)=(200,0.4,15)
g (X,Y,Z)=(600,0.4,30)
h (X,Y,Z)=(600,0.4,15)
Y(10°)(k=0.4)
COLORANT CONCENTRATION C (MASS %)
0
100
200
300
400
500
600
700
800
900
1000
10
20
30
40
50

FIG.8

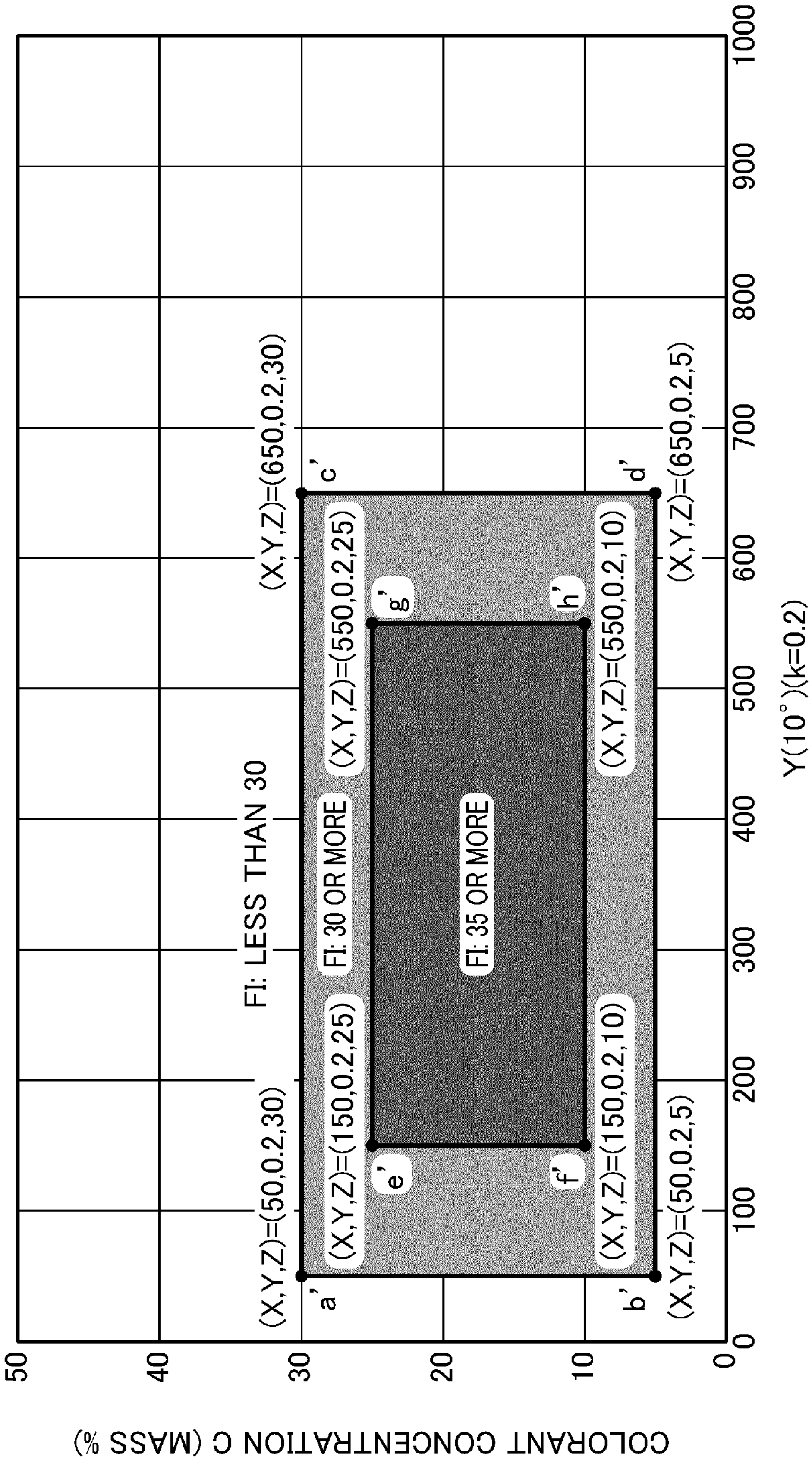
FI: LESS THAN 30
FI: 30 OR MORE
FI: 35 OR MORE
a' (X,Y,Z)=(50,0.2,30)
b' (X,Y,Z)=(50,0.2,5)
c' (X,Y,Z)=(650,0.2,30)
d' (X,Y,Z)=(650,0.2,5)
e' (X,Y,Z)=(150,0.2,25)
f' (X,Y,Z)=(150,0.2,10)
g' (X,Y,Z)=(550,0.2,25)
h' (X,Y,Z)=(550,0.2,10)
COLORANT CONCENTRATION C (MASS %)
Y(10°)(k=0.2)
0
10
20
30
40
50
100
200
300
400
500
600
700
800
900
1000

FIG.9

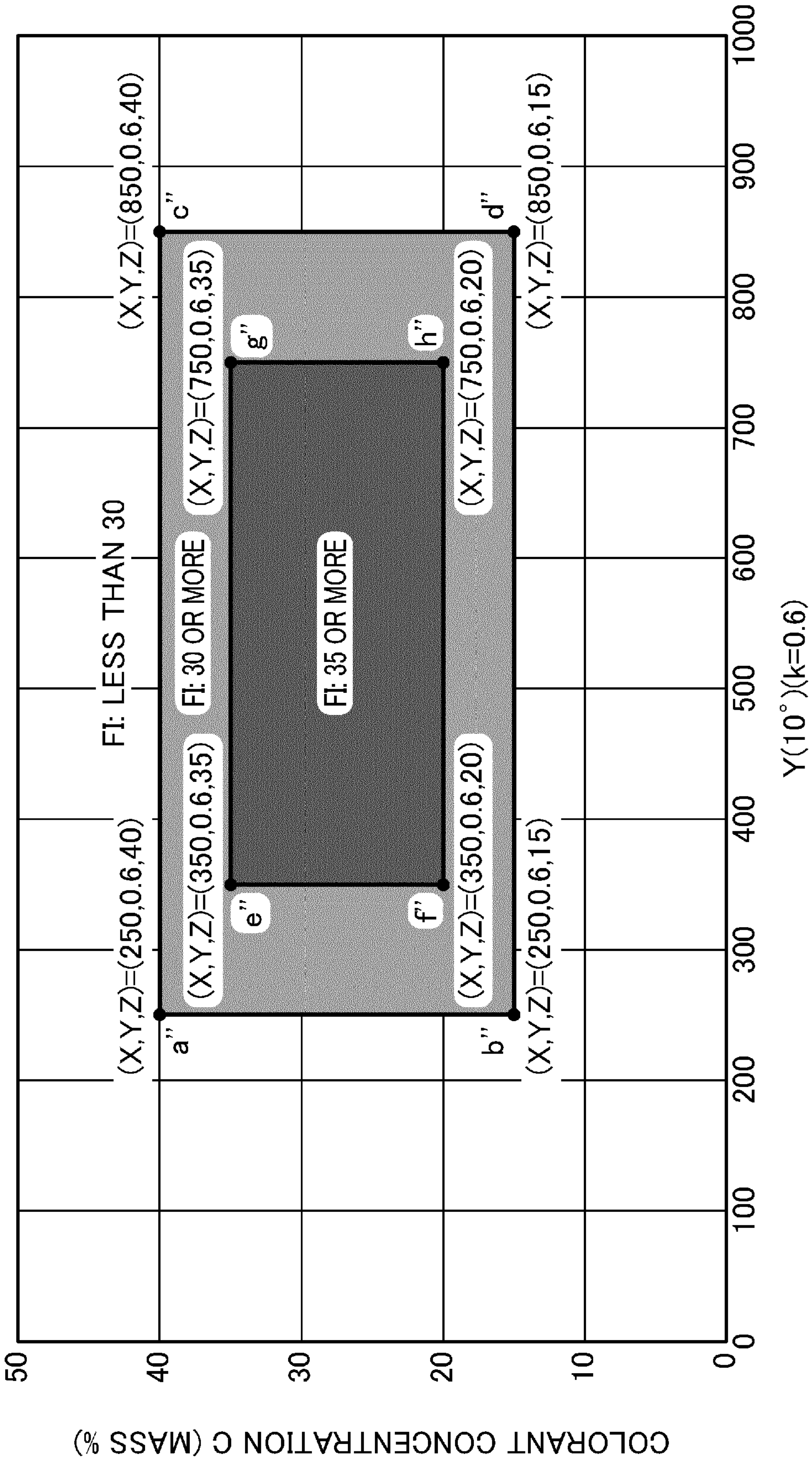
FI: LESS THAN 30
FI: 30 OR MORE
FI: 35 OR MORE
a" (X,Y,Z)=(250,0.6,40)
b" (X,Y,Z)=(250,0.6,15)
c" (X,Y,Z)=(850,0.6,40)
d" (X,Y,Z)=(850,0.6,15)
e" (X,Y,Z)=(350,0.6,35)
f" (X,Y,Z)=(350,0.6,20)
g" (X,Y,Z)=(750,0.6,35)
h" (X,Y,Z)=(750,0.6,20)
Y(10°)(k=0.6)
COLORANT CONCENTRATION C (MASS %)
0
10
20
30
40
50
100
200
300
400
500
600
700
800
900
1000

FIG.10

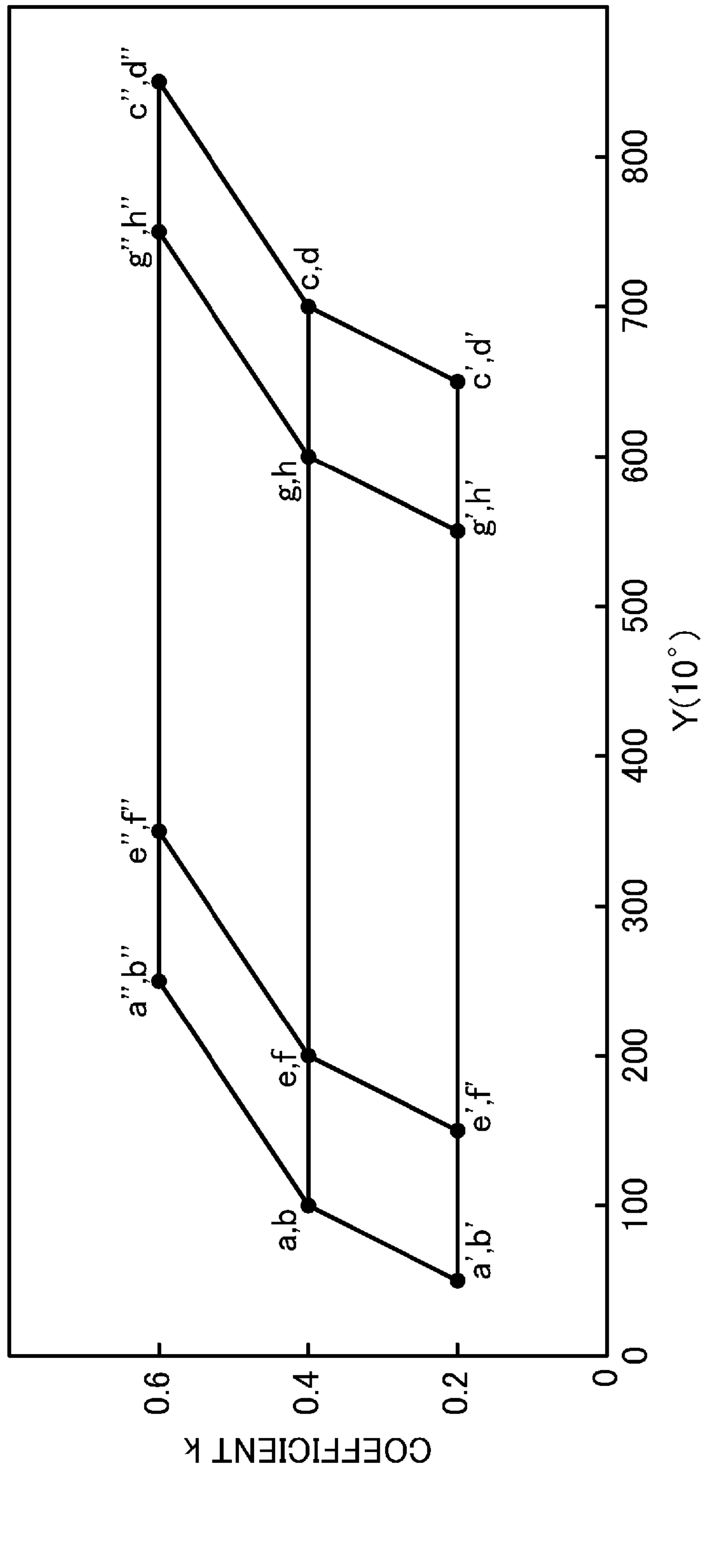
COEFFICIENT K
0.6
0.4
0.2
0
Y(10°)
0
100
200
300
400
500
600
700
800
a,b
a',b'
a'',b''
e,f
e',f'
e'',f''
g,h
g',h'
g'',h''
c,d
c',d'
c'',d''

FIG.11

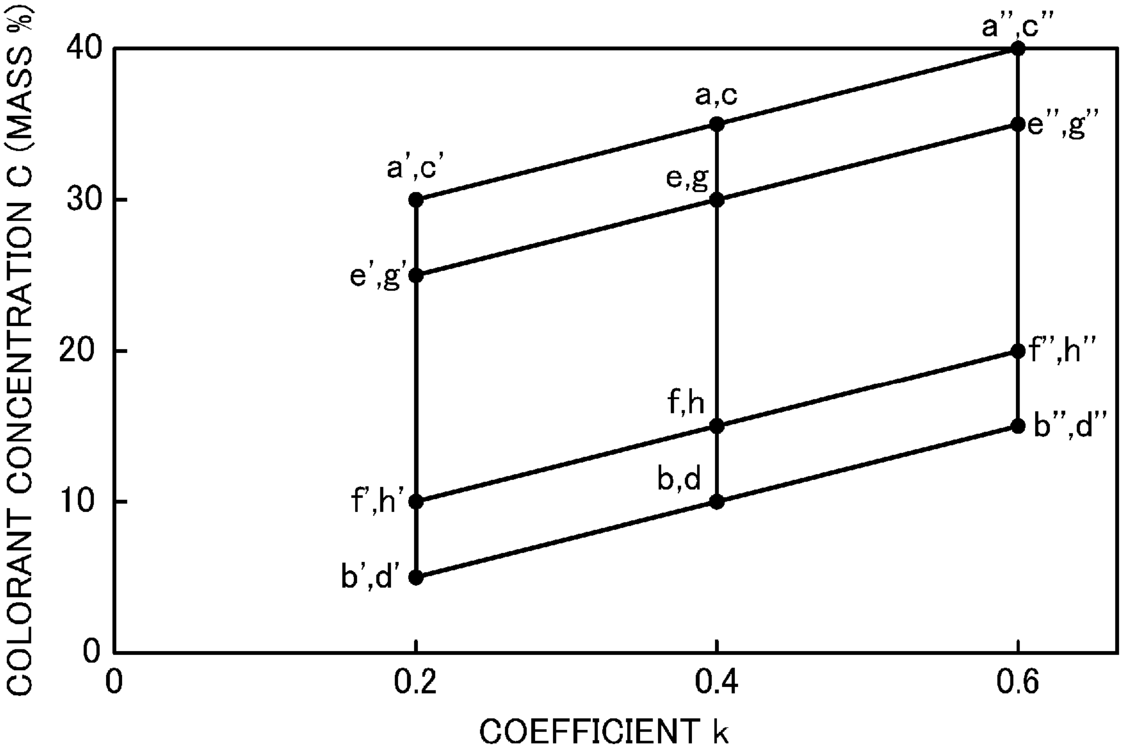
COLORANT CONCENTRATION C (MASS %)
40
30
20
10
0
0
0.2
0.4
0.6
COEFFICIENT k
a",c"
a,c
a',c'
e,g
e",g"
e',g'
f",h"
f,h
b",d"
b,d
f',h'
b',d'

FIG.12

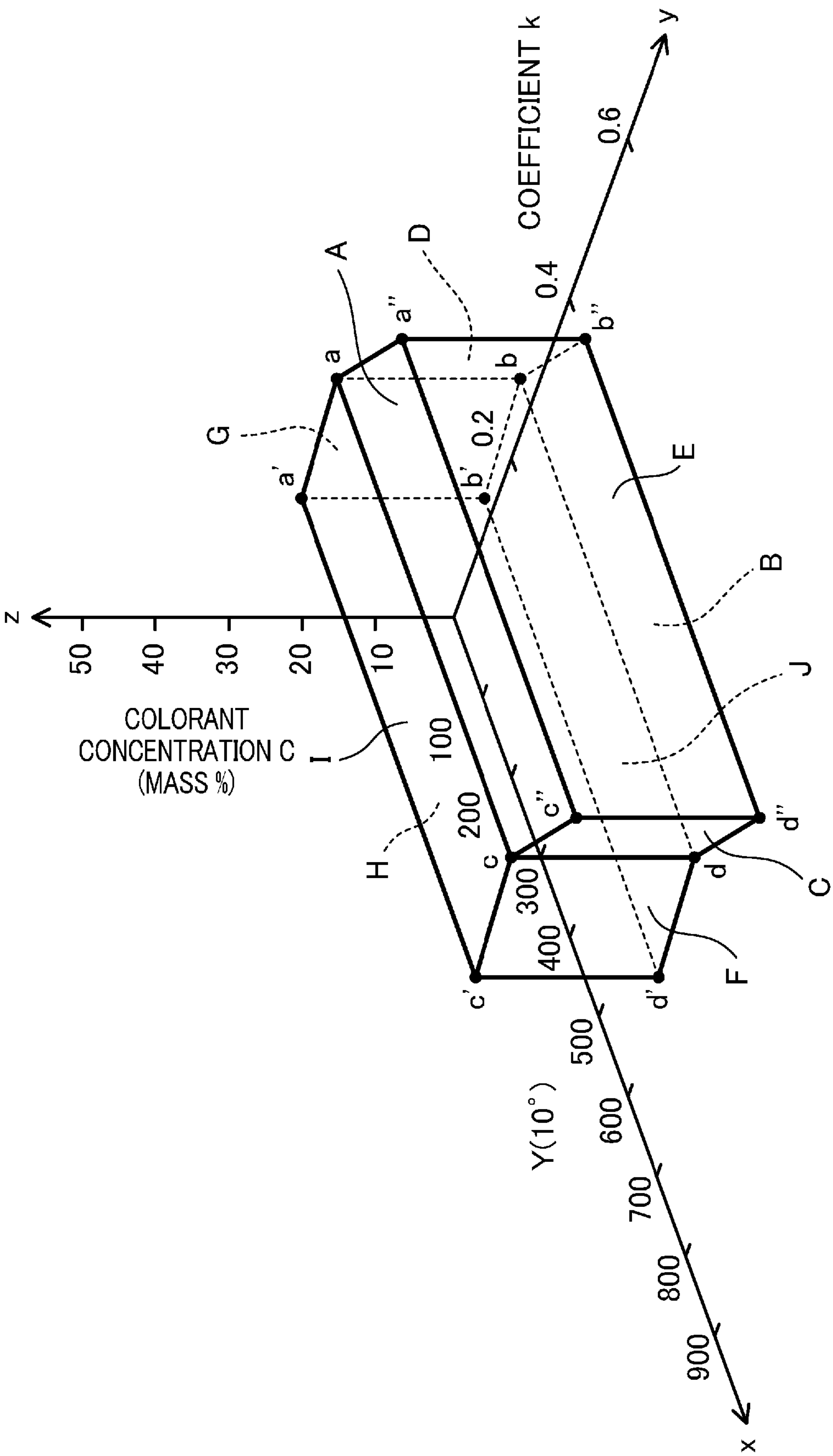
COEFFICIENT k
y
0.2
0.4
0.6
z
10
20
30
40
50
COLORANT CONCENTRATION C (MASS %)
x
Y(10°)
100
200
300
400
500
600
700
800
900
a
a'
a''
b
b'
b''
c
c'
c''
d
d'
d''
A
B
C
D
E
F
G
H
I
J

FIG.13

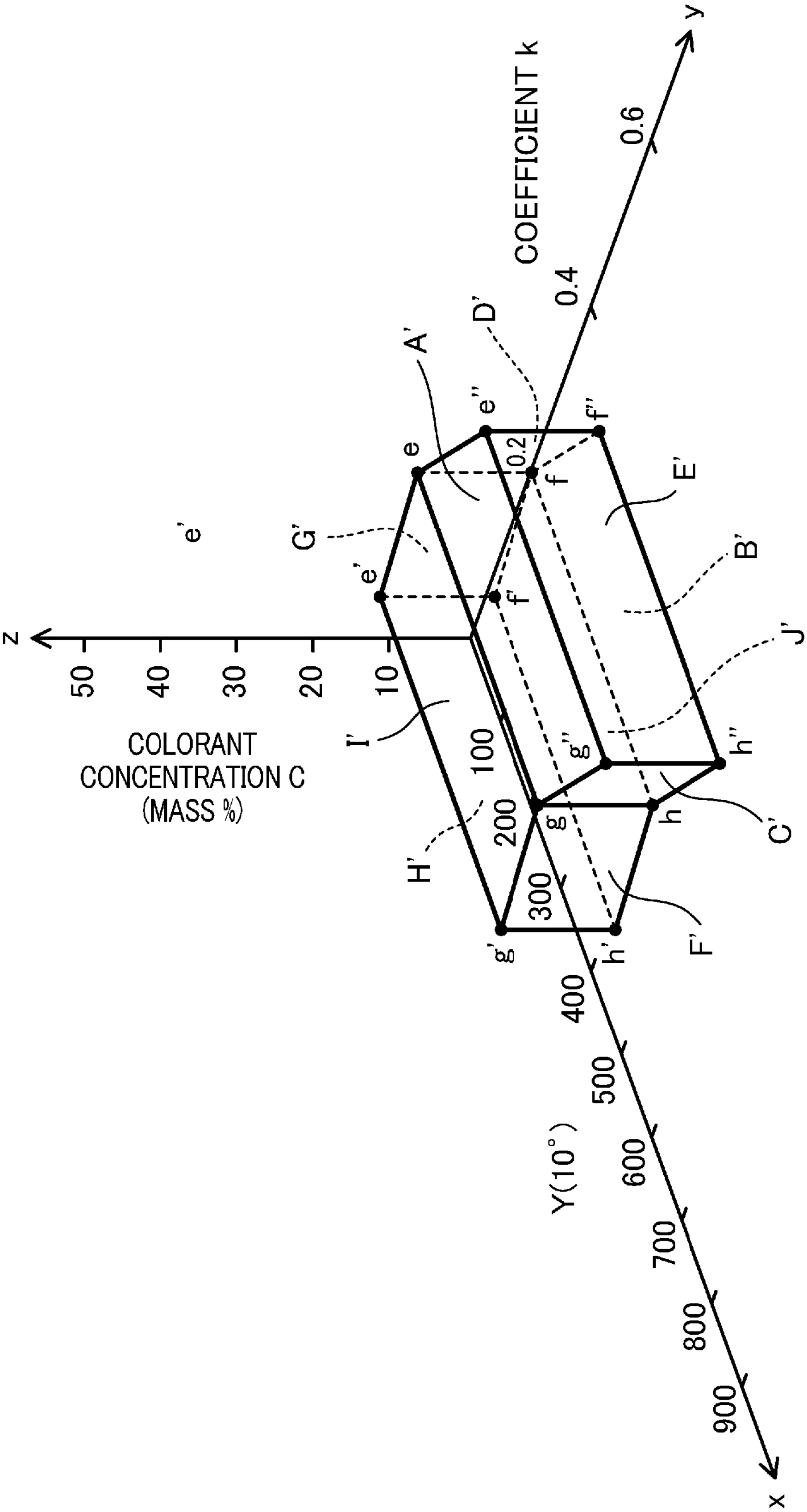
COLORANT
CONCENTRATION C
(MASS %)
z
10
20
30
40
50
COEFFICIENT k
y
0.2
0.4
0.6
Y(10°)
x
100
200
300
400
500
600
700
800
900
e
e'
e''
e'
f
f'
f''
g
g'
g''
h
h'
h''
A'
B'
C'
D'
E'
F'
G'
H'
I'
J'

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10192776 A
- JP 2005200519 A
- JP 2010030075 A
- JP 2005144338 A
- JP 2013169507 A
- JP 2000000514 A
- JP 2006181505 A
- JP 2011020021 A